# EUROPEAN PATENT SPECIFICATION

(11) **EP 0 711 677 B1**
(45) Date of publication and mention of the grant of the patent: **23.09.1998**
(21) Application number: 95202942.9
(22) Date of filing: 31.10.1995
(51) Int. Cl.: B60K 20/04

(54) **Tractor with manual gear shift lever**
Schlepper mit Hebel zum manuellen Gangschalten
Tracteur avec levier de changement de vitesses manuel

(30) Priority: 10.11.1994 IT TO940899
(43) Date of publication of application: 15.05.1996
(73) Proprietor: NEW HOLLAND ITALIA S.p.A., I-41100 Modena (IT)
(72) Inventor: Galli, Maurizio, I-41012 Carpi (Modena) (IT)
(74) Representative: Vandenbroucke, Alberic

(56) References cited:
- DE-A- 3 002 968
- GB-A- 1 390 171
- US-A- 3 899 934
- PATENT ABSTRACTS OF JAPAN vol. 8 no. 276 (M-346) [1713] ,18 December 1984 & JP-A-59 145629 (ISEKI NOKI) 21 August 1984,

## Description

The present invention relates generally to an agricultural or industrial vehicle and more specifically, although not exclusively, to a tractor having a manual gear shift lever assembly for operating the gear selection mechanism in the power transmission of the tractor. The assembly includes a selection lever having a hand operated end moveable by a tractor driver at least in the fore-and-aft direction of the tractor between a plurality of gear select positions predefined by the gear selection mechanism.

In such a tractor it has long been conventional to provide a manual gear shift lever which is moved between gear select positions through neutral to select any one of a number of gear ratios in the power transmission. There may be a further manual gear shift lever to select alternative high and low ratios and to make a selection between forward and reverse drives for the power transmission.

In a tractor, such as an orchard tractor, which is designed to operate within a confined space between rows of trees or other growing crop plants, the dimensions of the tractor are deliberately kept within narrow confines. As a result, the driver space allocated to the driver is also kept as narrow as is practicable whilst still allowing the driver to operate the tractor controls. In such a tractor, the space given to the driver controls and in particular the space within which such controls are moved by the driver is at a premium.

It has been found that the movement of the gear shift levers of the power transmission forwards, sideways and backwards within the driver operating space can result in an undesirable conflict between the space to be occupied by the limbs of the driver and the paths of travel of the gear shift levers as different gears are selected.

It has already been proposed in Japanese patent specification No JP 61 188 233 in the name of Yanmar Diesel Engine Co Ltd to give consideration to the placing of the change levers and shafts of the power transmission of an agricultural tractor so as to eliminate projections from the transmission case thereby providing a flat deck and widening the space to be occupied by the driver for easing the getting on and off of the tractor. However this prior proposal makes no reference to the problem of resolving the conflict between movement of the gear select levers and the space to be occupied by the limbs of the driver where the forward, sideways and backwards movements of the gear select levers would interfere with the driver space in a narrowly confined tractor.

It is therefore the object of the present invention to overcome the drawbacks of the prior art arrangements by providing a gear select lever on a narrowly confined tractor which does not interfere with the space occupied by the driver.

According to the present invention there is provided a vehicle having a manual gear shift lever assembly for operating the gear selection mechanism in a power transmission of the vehicle, the assembly including a selection lever having a hand operated end moveable at least forward and backward of the vehicle by a vehicle driver seated within a driver space of the vehicle between a plurality of gear selection positions predefined by the gear selection mechanism.

The vehicle is characterised in that the selection lever is connected to a control linkage which, during gear selection movement of the selection lever forwards and backwards of the vehicle, imposes on the said end of the lever a displacement transversely of the tractor such that the said end of the lever follows a curved path to skirt the driver space.

Preferably the selection lever is pivoted on the gear selection mechanism to impose on the said end of the selection lever an additional displacement downward as the selection lever is moved forwardly of the tractor during gear selection movement.

The invention will now be described in greater detail, by way of example, with reference to the accompanying drawings, in which:
Figure 1 shows in plan a part view of an agricultural tractor having manual gear shift levers for a power transmission of the tractor incorporating the present invention;
Figure 2 is a partial side elevational view of the tractor of Figure 1; and
Figure 3 shows a perspective view of the gear shift lever mounting in the tractor of Figures 1 and 2.

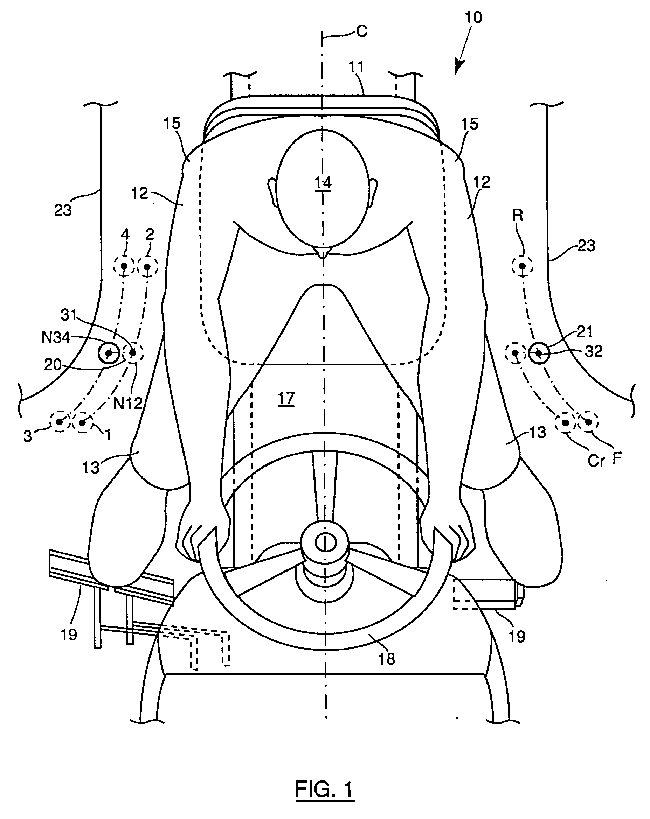

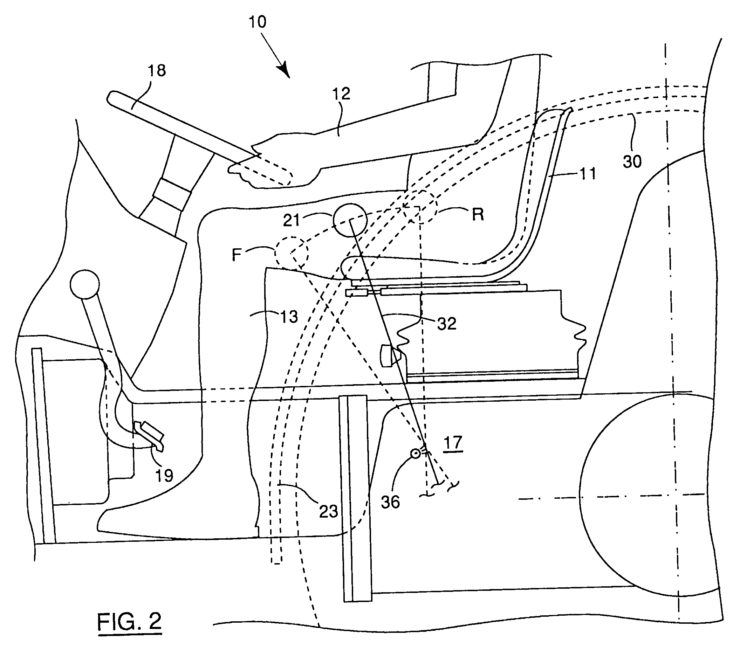

Referring now to Figures 1 and 2, there is shown a portion of an agricultural tractor generally designated by the reference numeral 10. The tractor has a seat 11 for a driver whose arms 12 and legs 13 are shown in outline diagrammatic form. The head 14 and shoulders 15 of the driver are also shown in Figure 1 thereby indicating the outline of the driver space to be occupied by a driver seated on the seat 11.

A power transmission for the tractor is generally indicated by the reference number 17. As will be appreciated the driver sits in a conventional position with feet astride the power transmission 17 so as to steer the tractor with a steering wheel 18, operate foot pedals 19 and grasp the manual knobs 20 and 21 of two manual gear selection levers. The driver sits between two guards 23 protecting the driver from the rear wheels of the tractor (one of the wheels 30 being shown in phantom outline in Figure 2).

In a tractor such as an orchard tractor which is deliberately designed to operate within confined spaces, the overall width of the tractor is kept within narrow confines to allow the tractor to pass between rows of trees or other growing row crop plants. As a result, the space between the guards 23 allocated to the driver is made as small as practicable consistent with the operation by the driver of the tractor controls.

It will be apparent from an examination of Figure 1 that a driver seated on the seat 11 has to spread his legs outwardly due to the presence of the power transmission 17. The gear selection lever 31 to his right is arranged to move from a position marked 1 where a first gear ratio is selected back to a position marked 2 where a second gear ratio is selected. A neutral position N12 is passed on the way to the selection of the second gear ratio. Similarly gear ratios 3 and 4 can be selected by moving the knob 20 of the right hand lever 31 sideways from the neutral position N12 through a neutral position N34 and then forwards and backwards between the positions marked 3 and 4 as will be well understood by those familiar with gear selection in power transmissions.

It will be appreciated from an examination of Figure 1 that movement of the right hand lever 31 carrying the knob 20 from the second gear position to the first would interfere with the position assumed by the right leg of the tractor driver if the gear selection positions were to be arranged in the conventional H-pattern (not shown) where the paths of movement of the lever 31 followed straight lines running parallel to the fore-and-aft centerplane C of the tractor as seen in plan view in Figure 1. Therefore, in the past, sufficient width had to be provided within the tractor so that the backwards and forwards movements of the lever 31 were offset from the space to be occupied by the driver. However, such an arrangement necessitates a wider tractor than is desirable for certain applications. Orienting the conventional H-pattern parallel to the leg of the driver, or in other words under an angle relative to the centerplane C, neither would be a suitable solution as the knob 20 then would interfere with the right mud guard 23. Moreover, as a result, the H-pattern also would stand under an angle relative to the power transmission 17, thereby complicating the transmission of movement of the gear shift lever 31 towards the interior shift mechanism of the transmission 17.

A similar problem related to a confined driver space is apparent from the movements of the knob 21 of the left hand lever 32 which is used to select a forward drive F, a reverse drive R and a creeper drive Cr. If the movements of the left hand selection lever 32 were arranged to follow straight lines as viewed in the plan view of Figure 1, the knob 21 of this lever 32 either would foul the position to be adopted by the left leg of the driver or would interfere with the left guard 23.

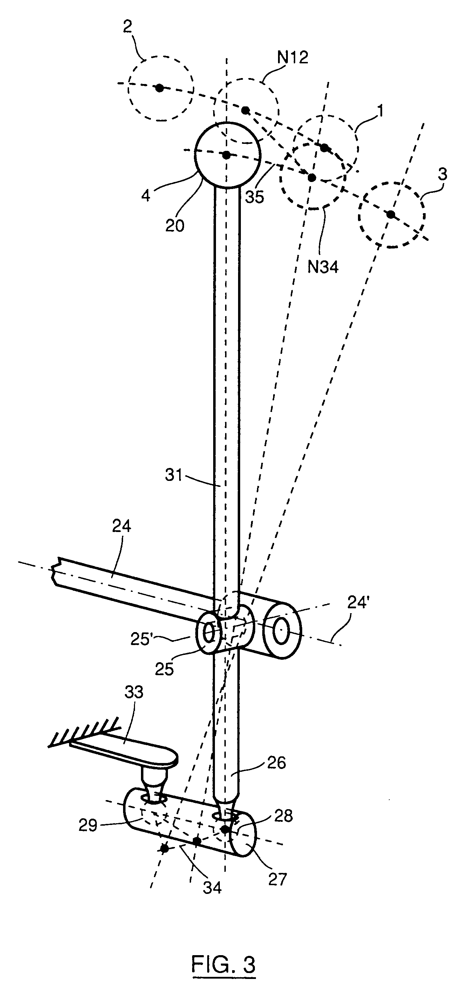

To obviate these problems and in accordance with the present invention, each of the selection levers 31, 32 is therefore pivoted to the gear selection mechanism of the power transmission 17 in the manner shown more clearly in the perspective view of Figure 3 in which only the right hand gear selection lever 31 has been exemplified. The full line position of the lever 31 represents the location thereof when the fourth gear has been selected. As seen, the lever 31 is pivotally connected at 25 to a gear selection shaft 24, said connection 25 allowing rotation of the lever relative to the shaft 24 about an axis 25'. The shaft 24 is mounted for both sliding movement along its longitudinal axis 24' and for rotation about said longitudinal axis 24'. It will be appreciated by those skilled in the art that such movements of the shaft 24 cause the gear shift mechanism interiorly of the power transmission 17 to be moved respectively from one neutral position to the other or into the gear selection positions 1 to 4. The operation of the shaft 24 on the gear selection mechanism within the transmission 17 is of a conventional nature and therefore need not be discussed in any further details. It further will be apparent that the rotational and shifting movements of the shaft 24 cause the gear selection lever 31 to be translated into the gear selection positions 1 to 4, respectively from one neutral position to the other. A spring (not shown) may be provided on the shaft 24 to urge the lever 31, when placed in the neutral position, towards the position N34 in order to keep the access space for the driver as large as possible.

The end 26 of the gear selection lever 31 remote from its operating knob 20 is connected to an articulated link 27 by way of a ball joint 28. The link 27 has a further ball joint connection 29 by means of which it is articulated to a fixed cantilever 33 mounted rigidly on the tractor frame. By reason of the link 27, the lower end 26 of the gear selection lever 31 must remain at a fixed distance from the outer end of the cantilever 33 but can describe an arc centred on the joint 29. Movement of the operating knob 20 on the selection lever 31 from e.g. the gear selection position 4 to the gear selection position 3 therefore results in rotation of the lever 31 about the longitudinal axis 24' of the selection shaft 24 while the lower end 26 of the gear selection lever describes an arc 34 determined by the link 27. Since the gear selection lever 31 is rigid, it follows that the operating knob 20 at the top thereof must also follow an arc 35 determined by the arcuate movement of the link 27 and the amount of rotation of the shaft 24.

Considering on the one hand that the axis 24' is oriented perpendicularly to the centerplane C of the tractor 10 and on the other hand that the axis 25' in turn stands at right angles to the axis 24', the connection of the lever 31 to the link 27 therefore results in a transverse displacement of the knob 20 relative to the tractor 10 so as to carry the knob 20 along a curve to skirt the driver space as is illustrated most clearly in the plan view of Figure 1. Thus the movement of the knob 20 from the gear selection position marked 2 at the side of the driver forwards to the gear selection position marked 1 results in a transverse displacement of the knob 20 outwards from the driver space so as to miss that part of the driver space allocated to the right leg of the driver. Similarly, it can be seen that the movements between the gear selection positions 3 and 4 also follow a corresponding curved path to skirt the right mud guard 23. Due to the fact that the link 27 is oriented parallel to the gear selection shaft 24 when the lever 31 is in the gear selection positions 2 or 4, any movement of the lever 31 away from these positions towards positions 1 or 3, automatically results in a transverse, outward movement of the knob 20 since the transverse component of the distance between the ball joints 28 and 29 diminishes due to the arcuate movement of the link 27.

Whilst the operating knob 20 follows a sideways displacement as already described and as shown in the plan view of Figure 1, it will be apparent from the connection 25 to the selection shaft 24 that the right hand gear selection lever 31, as already mentioned, pivots about the longitudinal axis 24' of the shaft 24. This pivotal action results in the occurrence that, with the arrangement as shown in figure 3 in which the lever 31 is oriented generally vertically when in the gear selection positions 2 and 4, the operating knob 20 also rotates downwardly in its forward movement from the gear selection position 2 to the gear selection position 1 and from the position 4 to the position 3. As a result, the knob 20 of the right hand selection lever has a compound motion which allows it to move comfortably into the space alongside the right leg of the driver and yet conform to the shape of the adjacent guard 23.

It will be appreciated that the transverse and downward distance travelled by the knob 20 when e.g. shifting from fourth gear to third gear, is related to the overall geometrical design of the arrangement, more specifically the length of the lever 31 inbetween the knob 20 and the pivotal connection 25, the length of the lever end 26 and of the link 27. Consequently, by changing these geometrical design characteristics, the paths of movement of the lever 31 when shifting gears can be adopted to the specific needs of the available space inbetween the driver and any adjacent vehicle components, such as a mud guard, close to the driver. Also, if need would be, the link 27 may be arranged parallel to the gear selection shaft 24 when the lever is located in one of its neutral positions N12 or N34, resulting in an arrangement in which the lever 31 would assume an inward position (relative to the centerplane C) when in the neutral position and an outward position when one of the gears is selected.

Comparable to the right hand lever 31, the left hand gear selection lever 32 is connected at its lower end to an articulated link (not shown) which corresponds to the link 27 for the right hand lever 31 and is pivotally mounted at an intermediate point on a gear selection shaft 36 corresponding to the shaft 24 of the right hand lever. As a result it will be apparent that the knob 21 of the left hand selection lever 32 will also be constrained to move sideways as best seen in the plan view of Figure 1 in a manner to correspond to the sideways movement of the right hand lever 31. The curved path to be followed by the knob 21 of the left hand gear selection lever is arranged to be of opposite curvature to the knob 20 of the right hand gear selection lever 31 by mounting the articulated link of the left hand gear selection lever 32 oppositely to that of the right hand gear selection lever. In fact, as will be appreciated, the right and left arrangements are generally mirror images of each other.

An advantage of the arrangement shown and described is that the compound movements required of the operating knobs 20 and 21 are achieved in an efficient manner whilst retaining the conventional disposition and movements of the gear selection shaft 24 for the right hand lever 31 and the corresponding gear selection shaft 36 for the left hand lever 32.

Although the invention has been described in relation to an agricultural tractor, it will be clear that it is also applicable to an industrial tractor or any other utility vehicle in which only a confined space is available for placing the gear shift control handles. The invention further is not limited to a gear selection mechanism with only 3 or 4 gear selection positions but could be applied to such a mechanism having any number of positions.

## Claims

1. A vehicle (10) having a manual gear shift lever assembly for operating a gear selection mechanism in a power transmission (17) of the vehicle (10), the assembly including a selection lever (31/32) having a hand operated end (20/21) moveable at least forward and backward of the vehicle (10) by a vehicle driver seated within a driver space of the vehicle (10) between a plurality of gear selection positions predefined by the gear selection mechanism; and
characterised in that the selection lever is connected to a control linkage (27, 33) which, during gear selection movement of the selection lever (31/32) forwards and backwards of the vehicle (10), imposes on the said end (20/21) of the lever (31/32) a displacement transversely of the vehicle (10) such that the said end (20/21) of the lever (31/32) follows a curved path (35) to skirt the driver space.

2. A vehicle according to claim 1 characterized in that the control linkage (27, 33) comprises an articulated link (27) connected to the end (26) of the selection lever (31/32) remote from the hand operated end (20/21).

3. A vehicle according to claim 2 characterized in that the articulated link (27) is connected at one end to the selection lever (31/32) by means of a ball joint (28) and at the other end to a fixed point (33) through a further ball joint (29).

4. A vehicle according to any of the preceding claims characterized in that the lever (31/32) is pivotally mounted on a gear selection shaft (24) at an intermediate point (25) of the selection lever (31/32).

5. A vehicle according to claim 4 characterized in that the gear selection shaft (24) is rotatable about its longitudinal axis (24') and is slidable along its longitudinal axis (24'); the arrangement being such that for rotating said shaft (24) about its longitudinal axis (24') the gear selection lever (31/32) has to be moved to a predefined gear selection position and for sliding said shaft (24) along its longitudinal axis (24') the gear selection lever (31/32) has to be moved through a plurality of neutral positions (N12, N34).

6. A vehicle according to claims 4 or 5 characterized in that:
- the gear selection shaft (24) is oriented perpendicularly to a centerplane (C) of the vehicle (10); and
- the intermediate point (25) of the gear selection lever (31) comprises a connection (25) rotatable around an axis (25') standing at right angles to the axis (24') of the gear selection shaft (24).

7. A vehicle according to any of the claims 4 to 6 when appended to claim 2, characterized in that the articulated link (27) is oriented parallel to the gear selection shaft (24) when the gear selection lever (31/32) is positioned in a rearmost position as seen in the longitudinal direction of the vehicle (10) whereby any forward movement of the gear selection lever (31/32) results in a transverse, outward displacement of the lever end (20/21).

8. A vehicle according to any of the preceding claims characterized in that the selection lever (31/32) is oriented generally vertically when positioned in a rearmost position as seen in the longitudinal direction of the vehicle (10) whereby any forward movement of the gear selection lever (31/32) results in a downward displacement of the lever end (20/21).

9. A vehicle according to any one of the preceding claims characterized in that the gear selection lever (31/32) constitutes one of a plurality of such gear selection levers each moveable backwards and forwards of the vehicle (10) between a plurality of gear selection positions predefined by the gear selection mechanism and each connected to a control linkage (27, 33) to impose a displacement of the hand operated end (20/21) thereof transversely of the vehicle such as to follow a curved path (35) which skirts the driver space, there being one such selection lever (31/32) on each side of the driver space of the vehicle.

## Patentansprüche

1. Fahrzeug (10) mit einer manuellen Gangschalthebel-Baugruppe zur Betätigung eines Gangauswahlmechanismus in einem Kraftantriebsgetriebe (17) des Fahrzeuges (10), wobei die Baugruppe einen Wählhebel (31/32) mit einem handbetätigten Ende (20/21) aufweist, das von einem in einem Fahrerraum des Fahrzeuges (10) sitzenden Fahrzeugfahrer zumindest in Vorwärts- und Rückwärtsrichtung des Fahrzeuges zwischen einer Vielzahl von Gangauswahlpositionen bewegbar ist, die durch den Gangauswahlmechanismus vorgegeben sind,
dadurch gekennzeichnet, daß der Wählhebel mit einem Steuergestänge (27, 33) verbunden ist, das während der Gangauswahlbewegungen des Wählhebels (31/32) in Vorwärts- und Rückwärtsrichtung des Fahrers (10) auf das Ende (20/21) des Hebels (31/32) eine Bewegung quer zum Fahrzeug (10) derart aufprägt, daß das Ende (20/21) des Hebels (31,/32) einer gekrümmten Bahn (35) eng benachbart entlang des Fahrerraumes folgt.

2. Fahrzeug nach Anspruch 1,
dadurch gekennzeichnet, daß das Steuergestänge (27,33) ein gelenkig befestigtes Gestänge (27) umfaßt, das mit dem von dem handbetätigten Ende (20/21) entfernten Ende (26) des Wählhebels (31,32) verbunden ist.

3. Fahrzeug nach Anspruch 2,
dadurch gekennzeichnet, daß das gelenkig befestigte Gestänge (27) an einem Ende mit dem Wählhebel (31/32) über ein Kugelgelenk (28) und am anderen Ende mit einem festen Punkt (33) über ein weiteres Kugelgelenk (29) verbunden ist.

4. Fahrzeug nach einem der vorhergehenden Ansprüche,
dadurch gekennzeichnet, daß der Hebel (31/32) gelenkig an einer Gangauswahlwelle (24) an einem zwischenliegenden Punkt (25) des Wählhebels (31,32) befestigt ist.

5. Fahrzeug nach Anspruch 4,
dadurch gekennzeichnet, daß die Gangauswahlwelle (24) um ihre Längsachse (24') drehbar und entlang ihrer Längsachse (24') verschiebbar ist, wobei die Anordnung derart ist, daß für eine Drehung der Welle (24) um ihre Längsachse (24') der Gangwählhebel (31/32) auf eine vordefinierte Gangwählposition bewegt werden muß, und daß für eine Schiebebewegung der Welle (24) entlang ihrer Längsachse (24') der Gangwählhebel (31/32) über eine Vielzahl von Leerlaufstellungen (N12,N34) hinwegbewegt werden muß.

6. Fahrzeug nach den Ansprüchen 4 oder 5,
dadurch gekennzeichnet, daß:
- die Gangauswahlwelle (24) senkrecht zu einer Mittelebene (C) des Fahrzeuges (10) ausgerichtet ist, und
- der zwischenliegende Punkt (25) des Gangwählhebels (31) eine Verbindung (25) aufweist, die um eine Achse (25') drehbar ist, die unter rechten Winkeln zur Achse (24') der Gangauswahlwelle (24) steht.

7. Fahrzeug nach einem der Ansprüche 4 - 6 unter Rückbeziehung auf Anspruch 2,
dadurch gekennzeichnet, daß das gelenkig befestigte Gestänge (27) parallel zur Gangauswahlwelle (24) ausgerichtet ist, wenn sich der Gangwählhebel (31/32) an seiner hintersten Position bei Betrachtung in der Längsrichtung des Fahrzeuges (10) befindet, so daß irgendeine Vorwärtsbewegung des Gangwählhebels (31/32) zu einer querverlaufenden, nach außen gerichteten Bewegung des Hebelendes (20/21) führt.

8. Fahrzeug nach einem der vorhergehenden Ansprüche,
dadurch gekennzeichnet, daß der Wählhebel (31/32) allgemein vertikal ausgerichtet ist, wenn er in einer am weitesten hinten liegenden Position bei Betrachtung in der Längsrichtung des Fahrzeuges (10) angeordnet ist, so daß irgendeine Vorwärtsbewegung des Gangwählhebels (31,32) zu einer nach unten gerichteten Bewegung des Hebelendes (20/21) führt.

9. Fahrzeug nach einem der vorhergehenden Ansprüche,
dadurch gekennzeichnet, daß der Gangwählhebel (31/32) einen einer Mehrzahl derartiger Gangwählhebel darstellt, die jeweils in Rückwärts- und Vorwärtsrichtung des Fahrzeuges (10) zwischen einer Vielzahl von durch den Gangauswahlmechanismus vorgegebenen Gangauswahlpositionen bewegbar sind, und die jeweils mit einem Steuergestänge (27,33) verbunden sind, um dem handbetätigten Endes (20/21) des Hebels eine Bewegung in Querrichtung des Fahrzeuges aufzuprägen, so daß dieses Ende einer gekrümmten Bahn (35) folgt, die eng benachbart zu dem Fahrerraum verläuft, wobei ein derartiger Wählhebel (31,32) auf jeder Seite des Fahrerraumes des Fahrzeuges angeordnet ist.

## Revendications

1. Véhicule (10) possédant un ensemble de leviers manuels de changement de vitesse destiné à actionner le mécanisme de sélection de vitesse d'une boite de vitesses (17) du véhicule (10), l'ensemble comprenant un levier de sélection (31/32) possédant une extrémité de commande manuelle (20/21) déplaçable par le conducteur du véhicule assis dans l'espace du véhicule (10) alloué au conducteur, au moins de l'avant vers l'arrière du véhicule (10) entre plusieurs positions de sélection prédéfinies par le mécanisme de sélection de vitesse; et
caractérisé en ce que le levier de sélection est relié à une liaison de commande (27, 33) qui, durant le mouvement de sélection du levier de changement de vitesse (31/32) vers l'avant et l'arrière du véhicule (10), impose à ladite extrémité (20/21) du levier (31/32) un déplacement transversal par rapport au véhicule (10) de telle sorte que ladite extrémité (20/21) du levier suit un trajet incurvé (35) pour contourner l'espace du conducteur.

2. Véhicule selon la revendication 1, caractérisé en ce que la liaison de commande (27, 33) comprend une biellette (27) articulée reliée à l'extrémité (26) du levier (31/32) de sélection à l'opposé de l'extrémité (20/21) de manoeuvre.

3. Véhicule selon la revendication 2, caractérisé en ce que la biellette (27) articulée est reliée à une extrémité au levier (31/32) de sélection au moyen d'un joint (28) sphérique et à l'autre extrémité à un point (33) fixe par un joint (29) sphérique supplémentaire.

4. Véhicule selon l'une quelconque des revendications précédentes, caractérisé en ce que le levier (31/32) est monté avec pivotement sur un arbre (24) de sélection de vitesse en un point (25) intermédiaire du levier (31/32) de sélection.

5. Véhicule selon la revendication 4, caractérisé en ce que l'arbre (24) de sélection de vitesse peut pivoter autour de son axe (24') longitudinal et peut coulisser le long de son axe (24') longitudinal; l'arrangement étant tel que pour la rotation dudit arbre (24) autour de son axe (24') longitudinal, le levier (31/32) de sélection doit être déplacé vers une position prédéterminée de sélection de vitesse et pour le coulissement dudit arbre (24) le long de son axe (24') longitudinal, le levier (31/32) de sélection de vitesse doit être déplacé entre plusieurs positions (N12, N34) de points morts.

6. Véhicule selon les revendications 4 ou 5, caractérisé en ce que:
- l'arbre (24) de sélection de vitesse est orienté perpendiculairement à un plan (C) axial du véhicule (10); et
- le point (25) intermédiaire du levier (31) de sélection de vitesse comprend une liaison (25) pivotante autour d'un axe (25') perpendiculaire à l'axe (24') de l'arbre (24) de sélection de vitesse.

7. Véhicule selon l'une quelconque des revendications 4 à 6 lorsque rattachées à la revendication 2, caractérisé en ce que la biellette (27) articulée est orientée parallèlement à l'arbre (24) de sélection de vitesse lorsque le levier (31/32) est positionné dans une position arrière extrême par rapport à la direction longitudinale du véhicule (10), de telle sorte que tout mouvement vers l'avant du levier (31/32) de sélection entraîne un déplacement transversal vers l'extérieur de l'extrémité (20/21) du levier.

8. Véhicule selon l'une quelconque des revendications précédentes, caractérisé en ce que le levier (31/32) de sélection est orienté de manière généralement verticale lorsqu'il est positionné dans une position arrière extrême par rapport à la direction longitudinale du véhicule (10), de telle sorte que tout mouvement du levier (31/32) de sélection entraîne un déplacement vers le bas de l'extrémité (20/21) du levier.

9. Véhicule selon l'une quelconque des revendications précédentes, caractérisé en ce que le levier (31/32) de sélection de vitesse est l'un parmi une pluralité de leviers de sélection de vitesse où chacun est déplaçable vers l'arrière et vers l'avant du véhicule (10) entre plusieurs positions de sélection de vitesse prédéfinies par le mécanisme de sélection de vitesse, et chacun est relié à une liaison de commande (27, 33) destinée à imposer un déplacement de sa poignée (20/21) de manoeuvre, transversalement par rapport au véhicule de manière à suivre un trajet (35) incurvé qui contourne l'espace du conducteur, un tel levier (31/32) de sélection se trouvant de part et d'autre de l'espace du conducteur du véhicule.
